# EUROPÄISCHE PATENTSCHRIFT

(11) **EP 0 996 334 B1**
(45) Veröffentlichungstag und Bekanntmachung des Hinweises auf die Patenterteilung: **13.11.2002**
(21) Anmeldenummer: 98943646.4
(22) Anmeldetag: 02.07.1998
(51) Int. Cl.: A01K 93/00

(54) **ZUSATZGERÄT FÜR EINE ANGELRUTE**
ACCESSORY FOR A FISHING ROD
ACCESSOIRE POUR CANNE A PECHE

(30) Priorität: 08.07.1997 DE 19729120
(43) Veröffentlichungstag der Anmeldung: 03.05.2000
(73) Patentinhaber: STRAUB, Eberhard, 65812 Bad Soden (DE)
(72) Erfinder: STRAUB, Eberhard, 65812 Bad Soden (DE)
(74) Vertreter: Henkel, Feiler, Hänzel
(86) Internationale Anmeldenummer: DE9801880
(87) Internationale Veröffentlichungsnummer: WO99002031

(56) Entgegenhaltungen:
- DE-B- 2 341 283
- US-A- 2 726 476
- US-A- 2 908 991
- US-A- 3 370 376
- US-A- 3 443 336
- US-A- 3 875 695
- US-A- 4 757 635
- US-A- 5 404 669

## Beschreibung

Die Erfindung betrifft ein Zusatzgerät für eine Angelrute zur jeder Zeit beliebig veränderbaren Tiefeneinstellung eines ausgebrachten Fischköders. Das Zusatzgerät ist in Ergänzung konventioneller Angelgeschirre durch Befestigung an der Schwimmpose verwendbar. Als einfaches und kleines Zusatzteil ermöglicht es dem Angler, ohne Wiederholung des Köderwurfs die Schwebetiefe des Köders jederzeit beliebig zu regulieren bzw. variieren. Hierdurch kann insbesondere der Köder auch fortlaufend unmittelbar oder in einer bestimmten Höhe "über Grund" gehalten werden.

Der Angler ist in der Regel bestrebt, den Köder dem Fisch tunlichst "dicht über Grund" anzubieten, zumindest jedoch in einem absichtlich gewählten (meist geringen) Abstand vom Grund des Gewässers.

Eine solche gezielte Positionierung des Köders ist bislang jedoch nicht mit befriedigender Präzision auf praktikable Weise möglich.

Aus dem Stand der Technik ist es bekannt, vorab mittels eines (meist mehrfach) ausgeworfenen Senkbleis oder unter Zuhilfenahme anderer umständlicher Verfahren eine Bestimmung der Gewässertiefe vorzunehmen, um anschließend die Distanz zwischen Köder und Schwimmpose (d.h. das den Köder haltende "Floß") entsprechend dem gewünschten Abstand über dem Grund des Gewässers einzustellen. Dieses Verfahren ist jedoch zeitraubend und ungenau und der auf diese Weise bestimmte Meßwert ist nur unsicher und allenfalls ungefähr auf die Distanz zwischen Köder und Schwimmpose übertragbar. Davon abgesehen läßt sich eine einigermaßen verläßliche Übereinstimmung der jeweiligen Eintauchorte von Probewurf und Köderwurf, insbesondere bei größerer Entfernung vom Angler, in der Praxis nicht realisieren. Weiterhin kann in der Regel nicht mit einer ideal konstanten Tiefe eines ausgedehnteren befischten Gewässers gerechnet werden.

Es ist daher gegenwärtig nicht möglich, die Schwebetiefe des Köders nach dem Köderwurf in gewünschter Weise zu regulieren.

Die Aufgabe der vorliegenden Erfindung besteht darin, ein Zusatzgerät für eine Angelrute bereitzustellen, das es ermöglicht, nach erfolgtem Köderwurf die Schwebetiefe des Köders jederzeit in gewünschter Weise zu verändern. Das Zusatzgerät soll weiterhin konstruktiv unkompliziert, mit geringen Kosten herstellbar, nicht störungsanfällig und gering dimensioniert bzw. optisch für den Fisch nicht auffällig sein.

Die Aufgabe wird mit dem Zusatzgerät nach Anspruch 1 gelöst. Vorteilhafte Ausgestaltungen des Zusatzgeräts sind Gegenstand der Unteransprüche.

Das erfindungsgemäße Zusatzgerät zeichnet sich durch einen mit einer Schwimmpose kippbar verbindbaren und in Wasser sinkbaren Hohlkörper aus, der mit einer Eintrittsöffnung und einer Austrittsöffnung für eine Angelschnur versehen ist. Der Hohlkörper weist einen zwischen Eintritts- und Austrittsöffnung befindlichen inneren Hohlraum zur Aufnahme eines frei beweglichen, sinkbaren Klemmkörpers, beispielsweise einer Kugel oder einer Walze, auf. Der Hohlkörper ist so ausgestaltet, daß er durch Betätigung der Angelschnur zwischen einer Vertikalstellung mit festgeklemmter Angelschnur und einer Horizontalstellung mit beweglicher und insbesondere nach unten ablassbarer Angelschnur kippbar ist, so daß die Angelschnur in Vertikalstellung durch den Klemmkörper verklemmt wird, während sie in der Horizontalstellung von dem Klemmkörper freigegeben wird. Durch diese Merkmale wird es dem Angler ermöglicht, durch Betätigung der Angelschnur beispielsweise die Horizontalstellung des Hohlkörpers zu wählen, so daß der Angelschnurdurchlauf vom Klemmkörper freigegeben wird, und der Köder frei absinken kann. Bei Einstellung der Vertikalstellung des Hohlkörpers wird der Angelschnurdurchlauf mittels des Klemmkörpers gesperrt, so daß ein weiteres Absinken des Köders verhindert wird. Auf diese Weise läßt sich allein durch geeignete Betätigung der Angelschnur die Position des Köders über dem Grund entweder arretieren oder jederzeit wieder verändern.

Das erfindungsgemäße Zusatzgerät ist eine konstruktiv höchst unkomplizierte und deshalb wenig kostenaufwendige sowie nicht störungsanfällige, gering dimensionierbare und mühelos applizierbare Vorrichtung. Der Einsatz des Zusatzgerätes wird ohne Abwandlung des herkömmlichen Angelgeschirrs (Rute, Rolle, Angelschnur, Schwimmpose, Bleigewicht(e) usw.) ermöglicht und erlaubt es auch dem Ungeübten, den Köder beispielsweise nach eingetretener Grundberührung wieder um einen beliebigen Betrag anzuheben, und die - damit zunächst gefestigte - Köderposition nachfolgend ohne neuerlichen Wurf nach Wunsch zu korrigieren. Hierbei sind selbstverständlich jederzeit weitere Korrekturen bzw. Positionsveränderungen (Abstand über dem Grund) möglich. Diese Veränderungen können sowohl in Richtung größerer als auch in Richtung geringerer Tiefe (eventuell wieder "auf Grund" oder "dicht über Grund") in unbeschränktem Ausmaß erfolgen.

Das erfindungsgemäße Zusatzgerät stellt im wesentlichen einen festen Hohlkörper spezieller Form und Gewichtsverteilung dar, der eine Eintritts- und eine dieser ungefähr gegenüberliegende Austrittsöffnung für die durchlaufende Angelschnur aufweist. In einer bevorzugten Ausführungsform des Zusatzgerätes weist die Wandung des Hohlkörpers auf einer Seite eine tiefe muldenförmige Ausbuchtung auf. Im Inneren des Hohlkörpers befindet sich hierbei eine frei bewegliche Kugel als Klemmkörper.

Das spezifische Gewicht sowohl des Hohlkörpers als auch der Kugel ist höher als das von Wasser, so daß der Hohlkörper in das Wasser eintaucht und nach dem Eintauchen in Wasser über die Ein- bzw. Austrittsöffnung alsbald geflutet wird.

In "aufgerichteter" (vertikaler) Stellung des Hohlkörpers der bevorzugten Ausführungsform, d.h. bei Lage der Austrittsöffnung etwa senkrecht bzw. in maximaler Tiefe unterhalb der Eintrittsöffnung, kann sich die Kugel aufgrund ihres Gewichtes in die vorzugsweise kreisrund-trichterförmige Austrittsöffnung einpassen bzw. locker einkeilen und damit die Angelschnur zwischen sich und den ringförmigen Austrittsöffnungsrand einklemmen. Gleichzeitig stabilisiert sie dadurch die vertikale Ausrichtung des Hohlkörpers. Mit der (auswärts gerichteten) Zugkraft des Köders nehmen der bekneifende bzw. arretierende Effekt sowie die Stabilität der Vertikalstellung des Hohlkörpers zwangsläufig zu.

In "liegender" (horizontaler) Stellung des Hohlkörpers, d.h. bei etwa gleich tiefer Lage der beiden Öffnungen, rollt die Kugel, wiederum der Schwerkraft folgend, in die muldenförmige Ausbuchtung des Hohlkörpers. Dies wird dadurch herbeigeführt, daß diese Ausbuchtung durch den in bestimmter Weise durch den Angler ausgeführten Zug an der Angelschnur und bedingt durch die Art der Aufhängung des Hohlkörpers an der Schwimmpose sowie der Gewichtsverteilung des Hohlkörpers an die tiefste Stelle des Aggregats gelangt ist. Das Gewicht der in der Mulde ruhenden Kugel verleiht der horizontalen Lage des Hohlkörpers bei freiem Durchlauf der Angelschnur zusätzliche Stabilität.

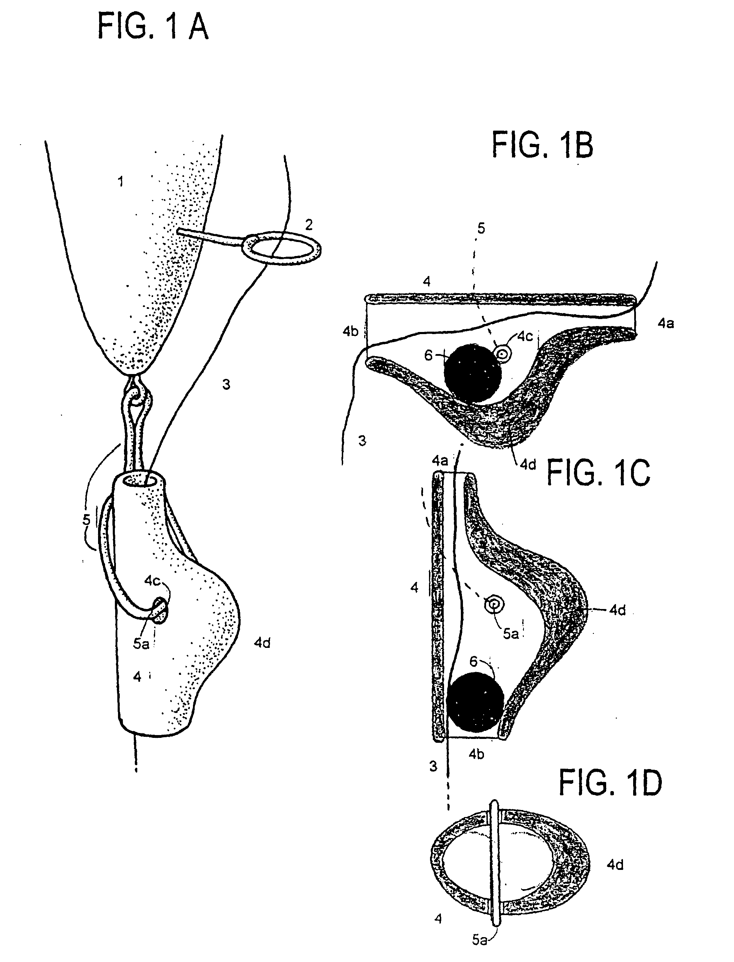

In einer weiteren bevorzugten Ausführungsform verläuft durch den Innenraum des Hohlkörpers quer zur Verbindungslinie von Angelschnur-Eintrittsöffnung und -Austrittsöffnung und symmetrisch zur muldenförmigen Ausbuchtung ein Stift (als Kippachse). Der Stift ist drehbar in zwei als Lager einander gegenüberliegenden Löchern der Wandung des Hohlkörpers gelagert (sh. Fig. 1). Dieser Stift ist Teil eines außerhalb des Hohlkörpers geschlossenen und an der Pose mittels eines Gelenks beweglich befestigten Bügels.

Der Stift ist vorzugsweise so innerhalb des Hohlraums angeordnet, daß er nicht nur die beiden alternativen stabilen Lagen des Hohlkörpers, d.h. die horizontale Lage oder die vertikale Lage, leicht und sicher herbeizuführen erlaubt, sondern darüber hinaus die Kugel zwar zwischen Austrittsöffnung und Mulde frei hin- und herrollen läßt, jedoch von der unmittelbaren Umgebung der Eintrittsöffnung abhält. Um die Kipprichtung des Hohlkörpers vorzugeben und ein Vertörnen der Angelschnur beim Wurf zu verhindern, ist der Bügel vorzugsweise derart gestaltet und angebracht, daß er stets auf der von der muldenförmigen Ausbuchung abgewandten Seite des Aggregats steht. Dies kann dadurch erreicht werden, daß der Eintrittsöffnungsstutzen und der Austrittsöffnungsstutzen die Exkursionen des (äußeren) Bügels begrenzen.

Die Gewichteverteilung bezüglich des Hohlkörpers sollte so bemessen sein, daß dieser, selbst wenn die Kugel in der Austrittsöffnung ruht, gerade eben zur Kippung um die Drehachse neigt, sofern nicht das Gewicht des Köders ein aufrichtendes Drehmoment erzeugt und infolgedessen - bei gemeinsam mit der inzwischen tiefergetretenen und gleichzeitig den Angelschnur-Durchlauf stoppenden Kugel bewirkter Stabilisierung - die aufgerichtete Stellung erhält.

Die Angelschnur verläuft zwischen Rutenspitze und Eintrittsöffnung des Hohlkörpers in der Regel durch eine an der Schwimmpose festsitzende, wenig Reibungswiderstand bietende Öse. Diese Öse ist vorzugsweise so montiert, daß einerseits der mehr oder weniger horizontal vom Aufenthaltsort des Anglers her ansetzende Zug der Angelschnur an der Schwimmpose das horizontalwärts wirkende Kippmoment verstärkt, andererseits dagegen bei angehaltenem Angelschnurdurchlauf unter Wiederaufrichtung der Schwimmpose auch die Aufrichtung des Hohlkörpers infolge Hebelwirkung (also letztlich durch Köder und Kugelgewicht) begünstigt wird.

Es versteht sich von selbst, daß die beschriebenen bevorzugten Ausführungsformen des Zusatzgerätes sich nicht gegenseitig ausschließen, sondern auch in beliebiger Weise miteinander kombiniert werden können.

Eine Ausführungsform des erfindungsgemäßen Zusatzgerätes sowie die Funktionsweise des Gerätes werden nachfolgend anhand eines Ausführungsbeispiels in Verbindung mit den Zeichnungen näher erläutert. Hierbei zeigen:
Fig. 1 ein Ausführungsbeispiel des erfindungsgemäßen Zusatzgerätes in perspektivischer und in Schnittdarstellung;
Fig. 2 ein Schema der Wirkungsweise und der hauptsächlichen Schritte bei der Handhabung des Zusatzgerätes; und
Fig. 3 ein weiteres Schema der Wirkungsweise und der hauptsächlichen Schritte bei der Handhabung des Zusatzgerätes.

Fig. 1 zeigt auf der linken Seite eine perspektivische Ansicht einer Ausführungsform des erfindungsgemäßen Zusatzgerätes. Der Hohlkörper 4 ist über einen Bügel bzw. eine Aufhängung 5 mit der Schwimmpose 1 verbunden. Der Bügel 5 bildet hierbei eine Kippachse 5a für den Hohlkörper. Die Kippachse wird durch die im Hohlkörper als Kippachsenlager vorgesehenen Löcher 4c gelagert. Der Hohlkörper 4 weist weiterhin eine Eintrittsöffnung 4a und eine Austrittsöffnung 4b für die Angelschnur 3 auf, die durch die an der Schwimmpose 1 befestigte Öse 2 geführt wird. Auf der rechten Seite der Figur sind zwei Stellungen des Hohlkörpers 4 in Schnittansicht dargestellt. Die obere Darstellung zeigt den Hohlkörper in horizontaler Position, in der die Angelschnur 3 freien Durchlauf durch den Hohlkörper hat. In dieser Darstellung ist ebenfalls die als Klemmkörper wirkende Kugel 6 dargestellt, die aufgrund der Schwerkraft in der im Hohlkörper vorgesehenen Mulde liegt. An der Stelle der Mulde ist ebenfalls eine Wandverdickung 4d vorgesehen, die die Stabilität des Hohlkörpers in dieser Lage aufgrund ihres Gewichtes erhöht. Diese Wandverdickung kann weiterhin eine Tendenz des Hohlkörpers zur Horizontalkippung bei Neutralisierung des Köder- und Kugelgewichts herbeiführen. In der oberen Darstellung ist ebenfalls sehr gut zu erkennen, daß die von den Löchern 4c gelagerte Kippachse aufgrund ihrer Position innerhalb des Hohlkörpers den Weg der Kugel zur Eintrittsöffnung 4a versperrt.

Diese obere Schnittdarstellung in Fig. 1 entspricht dem Zustand "Go", bei dem der Ablauf der Angelschnur frei ist, so daß der Köder absinken kann.

Die mittlere Schnittdarstellung in Fig. 1 zeigt den Zustand "Stop", bei dem der Ablauf der Angelschnur blockiert ist, so daß der Köder in einer festen Position über dem Grund des Gewässers festgesetzt ist. In dieser Position blockiert die Kugel 6 die Austrittsöffnung 4b und keilt damit die Angelschnur 3 ein.

Die untere Schnittdarstellung zeigt schließlich einen Blick von der Austrittsöffnung 4b zur Eintrittsöffnung 4a. Auch hier ist deutlich zu erkennen, daß die Kippachse 5a den freien Durchgang zwischen Austritts- und Eintrittsöffnung für die Kugel verwehrt, deren Durchmesser schematisch angedeutet ist.

Der Hohlkörper nimmt vermöge seiner speziellen Form und der relativen (asymmetrischen) Gewichtsverteilung, wie in Fig. 1 gezeigt, durch geeignete Ausführung des Zugs an der Angelschnur, d.h. durch angemessene Bewegung bzw. Haltung der Angelrute, entweder die aufrechte (vertikale) oder die querliegende (horizontale) stabile Lage ein.

Erstere Einstellung bedeutet eine Fixierung der mit dem Köder belasteten Angelschnur in der Vorrichtung infolge der Einwanderung und leichten Einpressung der Kugel in die Austrittsöffnung (mittlere Darstellung in Fig. 1). Letztere Einstellung hebt infolge der Auswanderung der Kugel aus der Austrittsöffnung die Hemmung des Angelschnurdurchlaufs auf und läßt den Köder frei absinken (obere Darstellung in Fig. 1).

Die Umschaltung von "Stop" (vertikale Lage des Hohlkörpers) zu "Go" (horizontale Lage des Hohlkörpers) erfolgt, indem durch aufholende, die Angelschnur leicht verkürzende und diese aus der Arretierung im Hohlkörper befreiende Betätigung der Rute der Kippkraft ein Übergewicht über das zum Gewässergrund hin gerichtete Köder- und Kugelgewicht verschafft wird. Die anschließende widerstandslos nachgebende und die Angelschnur total entspannende Rutenbewegung läßt das Aggregat - bevor der angehobene Köder wieder seine Zugkraft in Richtung Gewässergrund entfaltet - vollends in die Horizontale kippen und gewährt damit der Angelschnur einen ungehemmten Auslauf. Insgesamt läßt sich diese Manipulation als eine (plötzliche, gleichwohl kontrollierte bzw. sanfte) "Ruckbewegung" bezeichnen. Geht diese Exkursion ausreichend forciert vonstatten, so wird die Schwimmpose und folglich auch der zur tiefergetauchten Öse hingezogene Hohlkörper um so mehr horizontalwärts bewegt, zumal dabei das volle Gewicht des solcherart ruckartig kurzfristig überschießend emporgehobenen Köders erst dann wieder Zug an der Angelschnur entfaltet, wenn die Kugel ihren die horizontale Lage des Hohlkörpers stabilisierenden Standort in der Mulde bereits eingenommen hat.

Wird demgegenüber, um von "Go" zu "Stop" umzuschalten, der durch das Ködergewicht verursachte Durchlauf der Angelschnur vom Angler in einem frei gewählten Zeitpunkt plötzlich angehalten, richtet sich der Hohlkörper infolge der Hebelwirkung unter Drehung um die Kippachse sofort auf. Sofern der Angler die Angelschnur in dieser Phase erst nach dem Wirksamwerden des vollen Ködergewichts am Hohlkörper frei gibt, d.h. wohl dosiert anspannend auslaufen läßt, nimmt die Kugel wieder die Lage in der Austrittsöffnung ein und blockiert den Durchlauf der Angelschnur. Das Ködergewicht, zusammen mit dem Kugelgewicht, erhält somit die stabile vertikale Stellung des Aggregats aufrecht.

Diese Umschaltung zwischen horizontaler Stellung des Hohlkörpers, d.h. dem freien Lauf der Angelschnur, und vertikaler Stellung des Hohlkörpers, d.h. der Arretierung der Angelschnur, läßt sich beliebig oft und jederzeit wiederholen. Der den Köder anhebende Vorgang sowie der den Köder absenkende Vorgang kann nach Wunsch ausgedehnt bzw. das Ausmaß der Positionsänderung des Köders kann uneingeschränkt bestimmt werden - bis hin zu dessen nachträglicher Lage "auf Grund" und eventuell neuerlich "dicht, oder in beliebiger Höhe, über Grund".

Eine sanft einsetzende und beliebig weit fortgeführte, den Köder bis zu einem allmählichen Halt aufholende Bewegung der Angelrute vermag selbstverständlich die Angelschnur auch ohne Zwischenphase "Go" unmittelbar neu im Hohlkörper und damit den Köder in entsprechend veränderter Position festzusetzen.

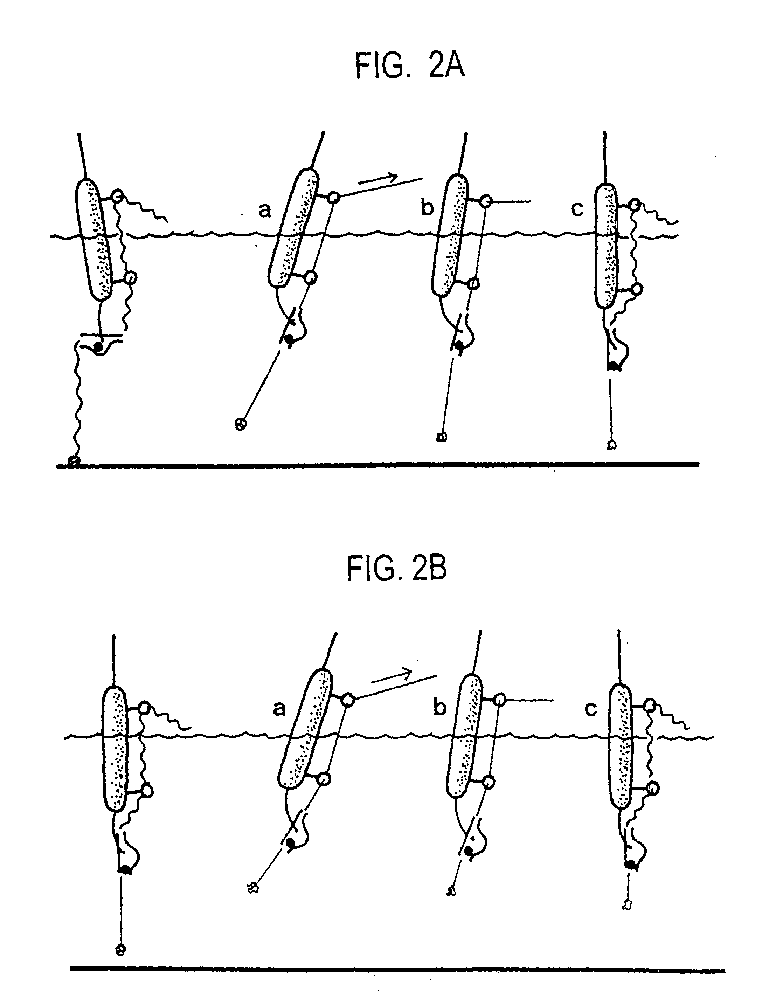

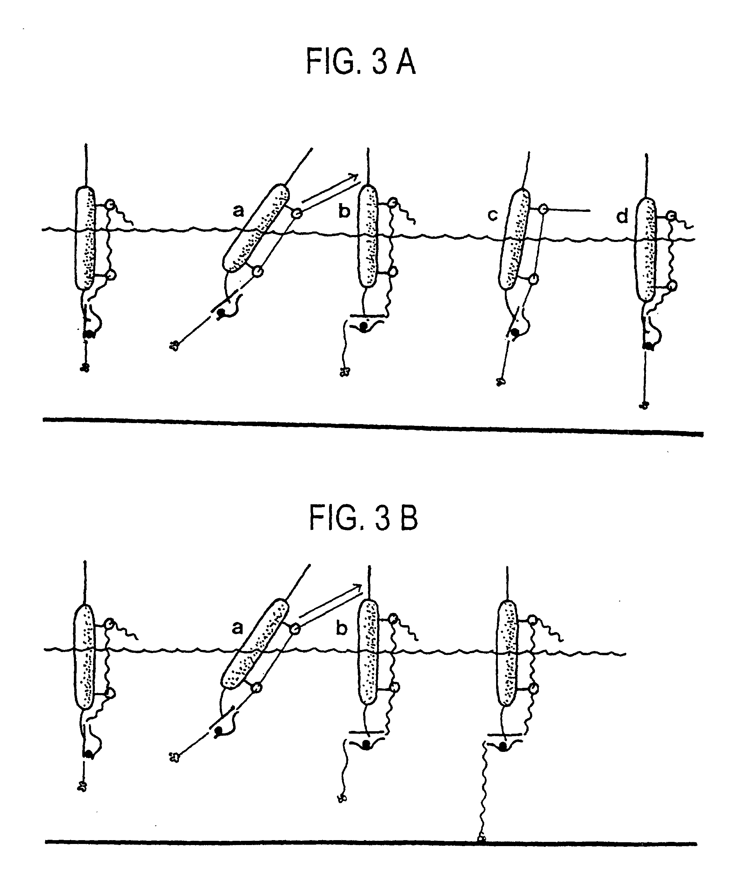

Die Fig. 2 und 3 beschreiben jeweils die hauptsächlichen Schritte bei der Handhabung des Zusatzgerätes.

Hierbei zeigt Fig. 2 im oberen Teil die Anhebung des Köders vom Gewässergrund und die Fixierung "über Grund" bzw. in beliebigem Abstand vom Gewässergrund, so daß eine freie Wahl der Ködertiefe möglich ist. Die Ausgangsposition mit dem Köder am Grund des Gewässers und mit entspannter Angelschnur ist im linken Teil der Abbildung zu erkennen. Im Schritt a) erfolgt das Einholen unter allmählicher sachter Anspannung der Angelschnur. In Punkt b) wird die Angelschnur unter Aufrechterhaltung der Anspannung der Schnur angehalten. Schließlich wird in Schritt c) ein verzögertes Ausgeben (Nachlassen) der Angelschnur durchgeführt, so daß die Kugel wieder in ihre arretierende Position gelangt und der Köder somit in einer bestimmten Tiefe über dem Gewässergrund festsitzt.

Im unteren Teil der Fig. 2 wird der Vorgang der Anhebung und erneuten Fixierung des (bereits schwimmenden) Köders in größerem Abstand vom Gewässergrund (mit freier Wahl der Ködertiefe) vorgeführt. In der Anfangsposition befindet sich hier, wie auf der linken Seite zu erkennen, der Köder in gewissem Abstand vom Gewässergrund. In Schritt a) erfolgt das Einholen der Angelschnur unter allmählicher sachter Anspannung. Im Schritt b) wird die Angelschnur unter Aufrechterhaltung der Anspannung angehalten. In Schritt c) erfolgt schließlich ein verzögertes Ausgeben (Nachlassen der Angelschnur), so daß der Köder in einer höheren Position fixiert wird. Selbstverständlich ist es auch möglich, den Köder zunächst bis auf den Grund absinken zu lassen, und ihn dann auf die gewünschte hohe Position in der dargestellten Form zu bringen.

Fig. 3 zeigt in der oberen Abbildung die Absenkung und erneute Fixierung des schwimmenden Köders in geringerem Abstand vom Gewässergrund (mit freier Wahl der Ködertiefe). In der Anfangsposition (linkes Bild) befindet sich der Köder in erhöhter Position über dem Gewässergrund bei locker gehaltener Angelschnur. In Schritt a) erfolgt ein forciertes Einholen - unter schlagartiger Anspannung - der Angelschnur. Hierbei nimmt der Hohlkörper gemeinsam mit der Schwimmpose eine annähernd horizontale Lage ein. In Schritt b) erfolgt ein plötzliches Ausgeben - unter vollständiger Entspannung - der Angelschnur, so daß sich die Schwimmpose aufrichtet. Dies führt zur Absenkung des Hohlkörpers und dessen Entlastung vom Ködergewicht und damit zur Kippung in die Horizontale. Die Angelschnur kann nun frei auslaufen, so daß der Köder absinkt. Durch Anhalten der auslaufenden Angelschnur in Schritt c) wird der Hohlkörper wieder in die annähernd vertikale Lage gebracht. In Schritt d) erfolgt ein verzögertes Ausgeben (Nachlassen) der Angelschnur, wodurch diese durch die Kugel fixiert wird, so daß der Köder in einer festen Höhe über dem Gewässergrund gehalten wird.

Die untere Darstellung in Fig. 3 betrifft die Absenkung des schwimmenden Köders auf dem Gewässergrund. Hierbei erfolgt in Schritt a) ein forciertes Einholen - unter schlagartiger Anspannung - der Angelschnur. In Schritt b) erfolgt anschließend ein plötzliches Ausgeben unter vollständiger Entspannung der Angelschnur, so daß der Hohlkörper in die horizontale Lage kippt und aufgrund der Gewichtsverteilung (Kugel und Form des Hohlkörpers) dort verharrt. Hierdurch wird die Angelschnur frei beweglich und der Köder kann auf den Grund absinken.

Das beschriebene Zusatzgerät ("Köderlift") kann in sehr unterschiedlicher, dem Angelgeschirr angepaßter Größe von wenigen Millimetern bis Zentimetern verwendet werden. Die Abmessungen werden hierbei auf das Ködergewicht bzw. die Tragfähigkeit der Schwimmpose, die Stärke der Angelschnur, ggf. die Fließgeschwindigkeit des Gewässers usw. abgestimmt.

Es ist hinsichtlich extremerer Bedingungen auch möglich, das im Bereich der Mulde des Hohlkörpers vorhandene Gewicht, welches die Horizontalkippung des Hohlkörpers hervorruft, und dessen Horizontallage - bis zur eventuellen aufrichtenden Manipulation - stabilisiert, auf einfache Weise veränderbar zu machen. Dies kann beispielsweise durch Anbringung von Bleikugeln o.ä. bei Bedarf, Verschiebung eines an der muldenseitigen Oberfläche des Hohlkörpers angebrachten Gewichts, Verlagerung der Kippachse usw. erfolgen.

Die aufrichtenden Hebelverhältnisse, die durch den Abstand des Eintrittsöffnungsstutzens und/oder Austrittsöffnungsstutzens von der Drehachse bestimmt werden, lassen sich bei der Herstellung variieren und evtl. am Gerät beim Gebrauch veränderbar gestalten.

Das Gerät kann als integrierter Bestandteil einer speziellen Schwimmpose oder aber als ein anklemmbares bzw. austauschbares Zusatzteil, das eine vorhandene Schwimmpose lediglich ergänzt, hergestellt werden.

Der Hohlkörper kann eventuell so konstruiert werden, daß er sich, etwa zur Reinigung oder auch zum Austausch der Kugel, öffnen bzw. zusammenstecken läßt. Dies dürfte sich in Anbetracht der beispielsweise unter Verwendung von Kunststoff sehr billigen Produktion des Gerätes allerdings wirtschaftlich nicht lohnen.

Die Funktion der in den Fig. 1 bis 3 vorgestellten Ausführungsform des Zusatzgerätes wird im folgenden nochmals zusammengefaßt.

Die im Hohlkörper vorhandene Kugel gibt, in die muldenförmige Ausbuchtung rollend, bei horizontaler Ausrichtung des Hohlkörpers den Angelschnurdurchlauf frei (Phase "Go"), sperrt bzw. arretiert jedoch den Angelschnurdurchlauf und verhindert damit das Tiefertreten des Köders bei vertikaler Ausrichtung des Hohlkörpers (Phase "Stop"), indem sie sich in die - nunmehr an die tiefste Stelle gelangte - kreisrunde und trichterförmige Auslaßöffnung verlagert und die Angelschnur dort einkeilt. Der Druck, mit dem die Angelschnur in dieser vertikalen Lage des Hohlkörpers an die Wandung des Hohlkörpers gepreßt wird, nimmt dabei mit dem Gewicht des Köders zu.

Sowohl bei vertikaler als auch bei horizontaler Stellung des Hohlkörpers stabilisiert sich diese Lage aufgrund der auf das Gesamtsystem wirkenden Gewicht der Kugel (und im Falle der vertikalen Ausrichtung des Hohlkörpers zusätzlich durch das Gewicht des Köders).

Der Umschaltvorgang, d.h. das Kippen des Hohlkörpers von der einen in die andere der beiden vorgegebenen stabilen Lagen (vertikal und horizontal) wird durch die Manipulation der Angelrute, d.h. den Zug an der Angelschnur, verursacht. Während ein stetiger und sacht nachlassender, den Köder aufholender Zug an der Angelschnur die vertikale Ausrichtung (Kippung) des Hohlkörpers bewirkt bzw. erhält und den Angelschnurdurchlauf blockiert, führt ein kurzer forcierter und sodann schlagartig unterbrochener (insgesamt ruckartiger) Zug an der Angelschnur zur Lockerung und vorübergehenden gewichtsmäßigen "Neutralisierung" der Kugel, gleichzeitig zur horizontalen Ausrichtung (Kippung) des Hohlkörpers. Dies wiederum führt zur Freigabe des Angelschnurdurchlaufs und folglich zum Absinken des Köders bis zu dem Moment des Anhaltens der Angelschnur, also der Aufrichtung des Hohlkörpers, wiederum mit Fixierung des Köders.

## Patentansprüche

1. Zusatzgerät für eine Angelrute, **gekennzeichnet durch** einen mit einer Schwimmpose (1) kippbar verbindbaren und in Wasser sinkbaren Hohlkörper (4), der mit einer Eintrittsöffnung (4a) und einer Austrittsöffnung (4b) für eine Angelschnur (3) versehen ist und einen zwischen Eintritts- und Austrittsöffnung befindlichen inneren Hohlraum zur Aufnahme eines frei beweglichen, sinkbaren Klemmkörpers oder einer Kugel (6) aufweist, wobei **durch** Betätigung der Angelschnur (3) der Hohlkörper (4) zwischen einer Vertikalstellung mit festgeklemmter Angelschnur und einer Horizontalstellung mit frei beweglicher und insbesondere nach unten ablaßbarer Angelschnur kippbar ist, so daß die Angelschnur in der Vertikalstellung **durch** den Klemmkörper bzw. die Kugel (6) verklemmt wird, während sie in der Horizontalstellung von dem Klemmkörper bzw. der Kugel (6) freigegeben wird, wobei das spezifische Gewicht sowohl des Hohlkörpers al auch des Klemmkörpers oder der Kugel höhen als das von Wasser ist.

2. Zusatzgerät gemäß Anspruch 1, **dadurch gekennzeichnet, daß** der Hohlkörper (4) am unteren Ende der Schwimmpose (1) mittels eines Bügels (5) kippbar befestigbar ist.

3. Zusatzgerät gemäß Anspruch 1 oder 2, **dadurch gekennzeichnet, daß** die Innenwandung des Höhlkörpers (4) an einer Seite eine tiefe muldenförmige Ausbuchtung zur Aufnahme des Klemmkörpers bzw. der Kugel (5) in der Horizontalstellung aufweist.

4. Zusatzgerät gemäß einem der vorstehenden Ansprüche, **dadurch gekennzeichnet, daß** der Bügel (5) eine Kippachse (5a) aufweist, die durch jeweils ein Kippachsenlager bildende Löcher (4c) des Hohlkörpers (4) hindurchgeführt ist.

5. Zusatzgerät gemäß Anspruch 4, **dadurch gekennzeichnet, daß** die Kippachse (5a) zwischen der Eintrittsöffnung (4a) und der Austrittsöffnung (4b) angeordnet ist, und daß der Klemmkörper bzw. die Kugel (5) zwischen der Austrittsöffnung (4b) und der Kippachse (5a) angeordnet ist und durch die Kippachse (5a) von der Eintrittsöffnung (4a) ferngehalten wird.

## Claims

1. An add-on unit for a fishing rod, **characterized by** a hollow body (4) which can be connected tiltably to a traditional float (1), can be submerged in water and is provided with an inlet opening (4a) and an outlet opening (4b) for a fishing line (3), and also comprises an inner cavity which is located between the inlet and outlet openings and is intended for receiving a freely movable, submersible clamping body or a ball (6), wherein actuation of the fishing line (3) making it possible for the hollow body (4) to be tilted between a vertical position, in which the fishing line is clamped firmly, and a horizontal position, in which the fishing line can be moved freely and, in particular, can be let out in the downward direction, with the result that, in the vertical position, the fishing line is clamped by the clamping body or the ball (6), whereas, in the horizontal position, it is released by the clamping body or the ball (6), wherein the relative density both of the hollow body and of the clamping body or ball is higher than that of water.

2. The add-on unit according to claim 1, **characterized in that** the hollow body (4) can be fastened tiltably at the bottom end of the traditional float (1) by means of a bracket (5).

3. The add-on unit according to claim 1 or 2, **characterized in that**, on one side, the inner wall of the hollow body (4) has a deep trough-like hollow for receiving the clamping body or the ball(6) in the horizontal position.

4. The add-on unit according to one of the preceding claims, **characterized in that** the bracket (5) has a tilting axis or spindle (5a) which is guided through holes (4c) of the hollow body (4), said holes respectively forming a tilting-spindle bearing.

5. The add-on unit according to claim 4, **characterized in that** the tilting spindle (5a) is arranged between the inlet opening (4a) and the outlet opening (4b), and wherein the clamping body or the ball (6) is arranged between the outlet opening (4b) and the tilting spindle (5a) and is kept away from the inlet opening (4a) by the tilting spindle (5a).

## Revendications

1. Accessoire pour canne à pêche, **caractérisé par** un corps creux (4), à assembler de manière pivotante avec un flotteur (1) et à enfoncer dans l'eau, lequel est muni d'un orifice d'entrée (4a) et d'un orifice de sortie (4b) pour une ligne (3), et un espace intérieur creux situé entre l'orifice d'entrée et l'orifice de sortie, destiné à recevoir un corps de serrage ou une bille (6) librement mobile et pouvant être enfoncé, sachant que par l'actionnement de la ligne (3) le corps creux (4) peut pivoter entre une position verticale avec une ligne bloquée et une position horizontale avec la ligne librement mobile et, en particulier, susceptible d'être abaissée, de telle sorte que la ligne est bloquée dans la position verticale par le corps de serrage ou la bille (6), alors que dans la position horizontale elle est dégagée du corps de serrage ou de la bille (6), sachant que le poids spécifique du corps creux, de même que du corps de serrage ou de la bille est supérieur à celui de l'eau.

2. Accessoire selon la revendication 1, **caractérisé en ce que** le corps creux (4) peut être fixé de manière pivotante contre l'extrémité inférieure du flotteur (1) au moyen d'un étrier (5).

3. Accessoire selon la revendication 1 ou 2, **caractérisé en ce que** la paroi intérieure du corps creux (4) forme sur un côté une courbure profonde en forme de cuvette, qui, dans la position horizontale, est destinée à recevoir le corps de serrage ou la bille (6).

4. Accessoire selon une des revendications précédentes, **caractérisé en ce que** l'étrier (5) comporte un axe de pivotement (5a), qui passe à travers des trous (4c) du corps creux (4), définissant chacun un palier de l'axe de pivotement.

5. Accessoire selon la revendication 4, **caractérisé en ce que** l'axe de pivotement (5a) est disposé entre l'orifice d'entrée (4a) et l'orifice de sortie (4b) et **en ce que** le corps de serrage ou la bille (6) est disposé entre l'orifice de sortie (4b) et l'axe de pivotement (5a) et est maintenu à l'écart de l'orifice d'entrée (4a) par l'axe de pivotement (5a).
